# EUROPEAN PATENT SPECIFICATION

(11) **EP 3 541 606 B1**
(45) Date of publication and mention of the grant of the patent: **05.01.2022**
(21) Application number: 17872014.0
(22) Date of filing: 26.10.2017
(51) Int. Cl.: B22F 10/20, B22F 10/40, B22F 3/24, B33Y 10/00

(54) **METHOD FOR ADDITIVE MANUFACTURING**
VERFAHREN ZUR GENERATIVEN FERTIGUNG
PROCÉDÉ DESTINÉ À LA FABRICATION ADDITIVE

(30) Priority: 18.11.2016 US 201615356253
(43) Date of publication of application: 25.09.2019
(73) Proprietor: General Electric Company, Schenectady, NY 12345 (US)
(72) Inventor: FIELDMAN, Zachary David, Schenectady, NY 12345 (US); HALL, Christopher, Schenectady, NY 12345 (US)
(74) Representative: Hafner & Kohl PartmbB
(86) International application number: PCT/US2017/058543
(87) International publication number: WO 2018/093546

(56) References cited:
- WO-A1-2016/113212
- KR-B1- 101 628 944
- US-A1- 2012 258 250
- US-A1- 2014 335 313
- US-A1- 2014 358 273
- US-A1- 2015 231 827
- US-A1- 2016 271 699
- US-B1- 6 352 669

## Description

### INTRODUCTION

The present disclosure generally relates to methods for additive manufacturing (AM) that utilize support structures in the process of building objects, as well as novel support structures to be used within these AM processes.

### BACKGROUND

AM processes generally involve the buildup of one or more materials to make a net or near net shape (NNS) object, in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. A particular type of AM process uses an energy beam, for example, an electron beam or electromagnetic radiation such as a laser beam, to sinter or melt a powder material, creating a solid three-dimensional object in which particles of the powder material are bonded together. Different material systems, for example, engineering plastics, thermoplastic elastomers, metals, and ceramics are in use. Laser sintering or melting is a notable AM process for rapid fabrication of functional prototypes and tools. Applications include direct manufacturing of complex workpieces, patterns for investment casting, metal molds for injection molding and die casting, and molds and cores for sand casting. Fabrication of prototype objects to enhance communication and testing of concepts during the design cycle are other common usages of AM processes.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758 describe conventional laser sintering techniques. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass and momentum transfer, and chemical reactions that make the process very complex. Document US2016271699 discloses a method of additive manufacturing metal components includes selecting a first component to be formed in a layer-by-layer process, and providing at least a second component to be formed in the same layer-by layer process. The components being selected such that the stresses created in the components during additive manufacturing are substantially balanced. The method further includes separating the components after completion of the layer-by-layer process. The components are manufactured on top of a baseplate and the parts are then treated to provide stress relieve while still attached to one another and the baseplate. The baseplate could therefore be considered as a support structure.

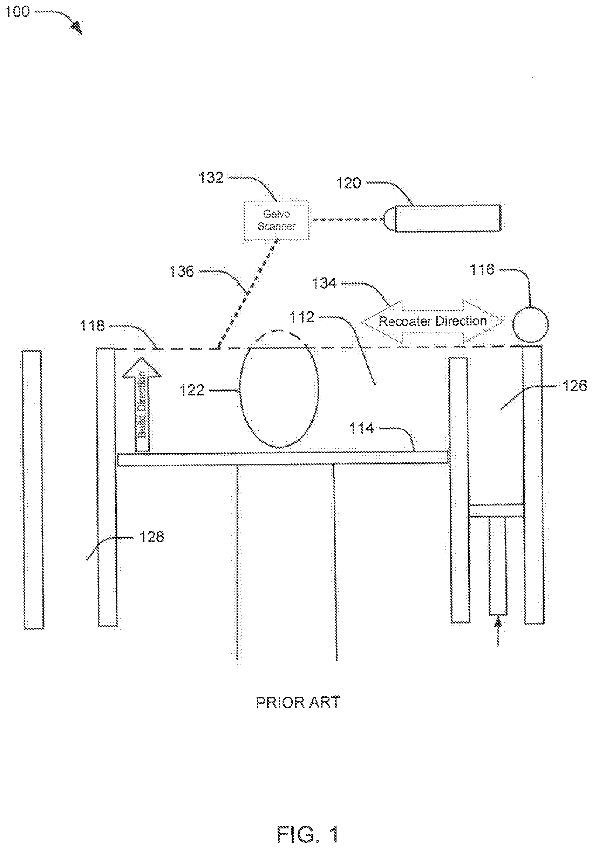

FIG. 1 is schematic diagram showing a cross-sectional view of an exemplary conventional system 100 for direct metal laser sintering (DMLS) or direct metal laser melting (DMLM). The apparatus 100 builds objects, for example, the part 122, in a layer-by-layer manner by sintering or melting a powder material (not shown) using an energy beam 136 generated by a source such as a laser 120. The powder to be melted by the energy beam is supplied by reservoir 126 and spread evenly over a build plate 114 using a recoater arm 116 travelling in direction 134 to maintain the powder at a level 118 and remove excess powder material extending above the powder level 118 to waste container 128. The energy beam 136 sinters or melts a cross sectional layer of the object being built under control of the galvo scanner 132. The build plate 114 is lowered and another layer of powder is spread over the build plate and object being built, followed by successive melting/sintering of the powder by the laser 120. The process is repeated until the part 122 is completely built up from the melted/sintered powder material. The laser 120 may be controlled by a computer system including a processor and a memory. The computer system may determine a scan pattern for each layer and control laser 120 to irradiate the powder material according to the scan pattern. After fabrication of the part 122 is complete, various post-processing procedures may be applied to the part 122. Post processing procedures include removal of access powder by, for example, blowing or vacuuming. Other post processing procedures include a stress release process. Additionally, thermal and chemical post processing procedures can be used to finish the part 122.

The apparatus 100 is controlled by a computer executing a control program. For example, the apparatus 100 includes a processor (e.g., a microprocessor) executing firmware, an operating system, or other software that provides an interface between the apparatus 100 and an operator. The computer receives, as input, a three dimensional model of the object to be formed. For example, the three dimensional model is generated using a computer aided design (CAD) program. The computer analyzes the model and proposes a tool path for each object within the model. The operator may define or adjust various parameters of the scan pattern such as power, speed, and spacing, but generally does not program the tool path directly.

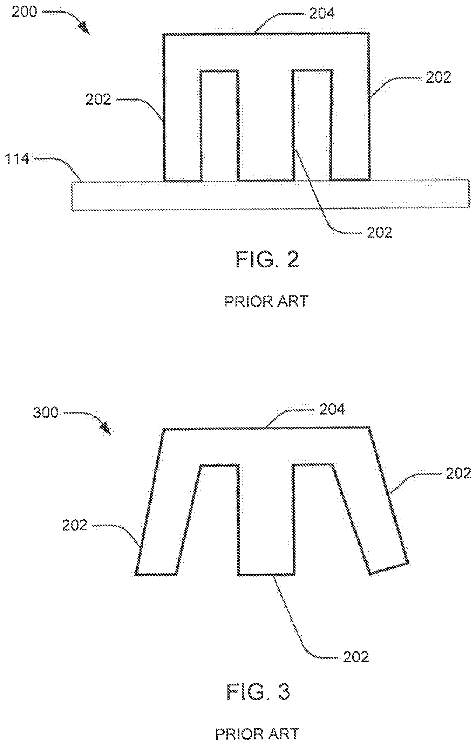

FIG. 2 illustrates a cross-sectional view of an unsupported object 200 built directly on a build platform 114. The object 200 includes vertical members 202, which may be, for example, legs or concentric rings. The vertical members 202 may form a bottom-most portion of the object 200 and be formed first as the object 200 is built upward from the build platform 114. A top portion 204 that connects the vertical members 202 is later built on top of the vertical embers 202. Each of the vertical members 202 may be initially connected to the build platform 114.

In a typical post processing procedure, the object 200 is removed from the build platform 114 in a machining process. For example, the object 200 may be removed using wire electrical discharge machining (EDM) to cut the object 200 from the build platform. The object 200 is then subjected to a heat treatment process.

The present inventors have discovered that, as illustrated in FIG. 3, a heat treatment process may result in deformation of the object 200 to result in the object 300. In particular, thermal expansion during the heat treatment may result in bending or warping of the vertical members 202. For parts with tight manufacturing tolerances, the deformation may result in an unacceptable part. For example, in a fuel nozzle application, deformation may result in parts being misaligned.

In view of the above, it can be appreciated that there are problems, shortcomings or disadvantages associated with AM techniques, and that it would be desirable if improved methods of supporting objects and support structures were available.

### SUMMARY

The following presents a simplified summary of one or more aspects of the invention in order to provide a basic understanding of such aspects.

The present invention is defined by the independent claim. Advantageous embodiments are described in the dependent claims.

### BRIEF DESCRIPTION OF THE DRAWINGS

FIG. 1 is schematic diagram showing an example of a conventional apparatus for additive manufacturing.
FIG. 2 illustrates a side view of an object on a build platform without supports.
FIG. 3 illustrates a side view of the object in FIG. 2 after a heat treatment.
FIG. 4 illustrates a side view of an object and a spoke support according to an aspect of the disclosure.
FIG. 5 illustrates side view of the object and spoke support of FIG. 4 after removal from a build platform, according to an aspect of the disclosure.
FIG. 6 illustrates a side view of the object of FIG. 4 after a heat treatment and removal of the spoke support, according to an aspect of the disclosure.
FIG. 7 illustrates a bottom view of an example object and spoke support, according to an aspect of the disclosure.

### DETAILED DESCRIPTION

The detailed description set forth below in connection with the appended drawings is intended as a description of various configurations and is not intended to represent the only configurations in which the concepts described herein may be practiced.

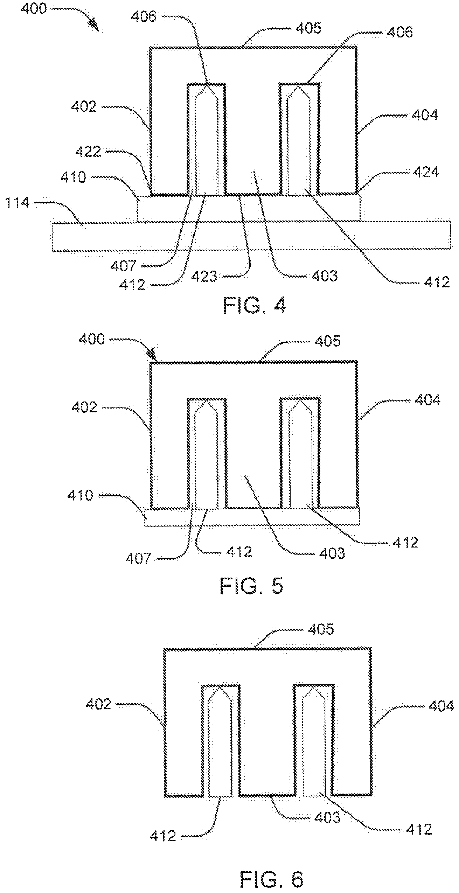

FIGS. 4 illustrates an example of an object 400 supported by a spoke support 410. Similar to the object 200, the object 400 includes multiple vertical members 402, 403, 404 which may include, for example, legs or annular walls. The vertical members 402, 403, 404 are connected by a top portion 405. Each of the vertical members 402, 403, 404 includes a respective distal end 422, 423, 424. A distal end of a portion of an object refers to an end of the portion that is away from the center of the object. The object 400 includes downfacing surfaces 406 between the vertical members 402, 403, 404. It should be appreciated, that as the object 400 is formed from the bottom up, the vertical members 402, 403, 404 are initially separated from each other. The vertical members 402, 403, 404 are connected once the top portion 405 is formed.

Instead of being built directly on the build platform 114, the object 400 is built on top of the spoke support 410. In this example, the spoke support 410 is a generally flat support that is built directly on the build platform 114. In an aspect, the spoke support 410 is substantially horizontal. For example, the spoke support 410 may have a maximum slope. For example, the maximum slope may be ± 10 degrees. The spoke support 410 is distally located from the distal ends 422, 423, 424 of the object 400. The spoke support 410 is formed using a scan pattern in at least a first layer that is different than a scan pattern for a bottom surface of the object 400. The spoke support 410 connects the separate portions of the object 400, for example, the vertical members 402, 403, 404. For example, the spoke support 410 connects a first vertical member 402 to a second vertical member 403. The first vertical member 402 is separated from the second vertical member 403 by a portion of unfused powder in a layer immediately above the spoke support 410. The spoke support 410 may also support other supports such as the supports 412. The supports 412 are, for example, breakable supports that support the downfacing surfaces 406. The supports 412 are built on top of the spoke support 410. Other supports known in the art may built on top of the spoke support 410 to support the object 400.

The spoke support 410 has a height sufficient to allow a first machining process (e.g., wire EDM) to remove the spoke support 410 and the object 400 from the build platform 114 without machining the object 400. A portion of the spoke support 410 may be removed in the first machining process, but a remaining portion of the spoke support 410 remains attached to the object 400. In an aspect, the height may also be small enough that a portion of the object 400 may be built on top of a thin portion of unfused powder surrounding the spoke support 410. For example, the spoke support 410 is not necessarily co-extensive with a bottom layer of the object 400. Portions of the object 400 that extend beyond the spoke support and portions of the object 400 that are not directly connected to the spoke support 410 are built on top of a thin layer of unfused powder. The spoke support 410 helps retain the portions of unfused powder as the first layer of the object 400 is formed.

FIG. 5 illustrates the object 400 remaining connected to the spoke support 410 after being removed from the build platform 114. The spoke support 410 may have a reduced height because a portion of the spoke support 410 may be machined away while removing the object 400 from the build platform 114. The spoke support 410 has a smaller width than the build platform 114. For example, the footprint of the spoke support 410 may be approximately the same as the footprint of the object 400. Accordingly, the object 400 and the spoke support 410 may occupy less space in an oven for a heat treatment process than the space that would be occupied by the build platform 114 and the object 400. During a heat treatment process, the object 400 maintains its original shape because the spoke support 410 maintains the position of the vertical members 402 relative to each other.

The spoke support 410 also retains the supports 412 in their original positions. Without the spoke support 410, the supports 412 may be inadvertently removed when removing the object 400 from the build platform 114. The supports 412 may also help prevent the object 400 from becoming deformed during the heat treatment process. As discussed in further detail below, the spoke support 410 has an open structure that allows unfused powder to be removed from the object 400 before the heat treatment process. Removal of the unfused powder prevents the unfused powder from sintering during the heat treatment process.

FIG. 6 illustrates the object 400 after a heat treatment process and after the spoke support 410 is removed. The heat treatment process releases stresses within the object 400. The spoke support 410 is removed once the heat treatment process is complete and the object 400 has cooled (e.g., to approximately room temperature). The spoke support 410 is removed using a machining process (e.g., wire EDM). Because the stress within the object 400 has been released via the heat treatment process, the object 400 does not deform when the spoke support 410 is removed.

The supports 412 may remain connected to the object 400 when the spoke support 410 is removed. The supports 412 are removed using an additional machining process. For example, the supports 412 may be removed by breaking the support at the narrow connection portion. Additional machining processes may be used to finish the object 400. For example, the object 400 may be ground and/or polished where the supports 412 were originally connected.

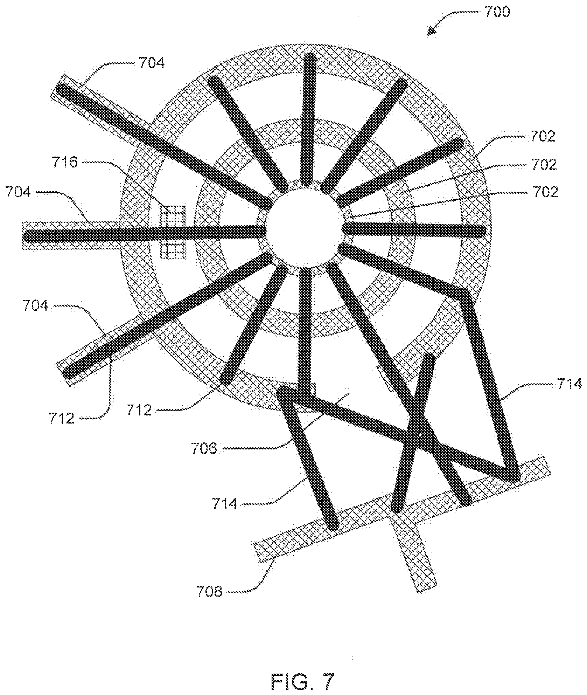

FIG. 7 illustrates a bottom view of an object 700 and a spoke support 710. For example, FIG. 7, represents an object and spoke support after removal from a build platform 114. The object 700 (shown with hashed fill) includes multiple concentric annular portions 702. The concentric annular portions may form, for example, co-axial connections. In an aspect, the outer concentric annular portion 702 includes projections 704 extending normally. The outer concentric annular portion 702, for example, also includes a gap 706. Accordingly, the outer concentric annular portion 702 may be partially annular. The object 700 also includes a separated portion 708 that is not directly connected to the concentric annular portions 702, at least at a bottom of the object 700. It should be appreciated that the various portions of the object 700 are coupled together by additional portions (not shown) as the height of the object 700 increases. Additionally, one or more supports 716 may be used to support portions of the object 700 during a build process. The supports 716 are removed during post processing.

The spoke support 710 (shown with solid lines), connects the various portions of the object 700 at a bottom surface of the object 700. The spoke support 710 may also connect any supports 716. The spoke support 710 includes multiple segments. In an aspect, the multiple segments are each straight line segments that connect the portions of the object 700 using a minimal area or minimal linear distance while meeting support criteria. Accordingly, the spoke support 710 is a generally open structure including spaces between the segments. The open structure allows unfused powder to be removed from the object 700 before a heat treatment process. The minimal area helps reduce build time and powder usage.

The support criteria define characteristics that prevent the object 700 from deforming during a heat treatment process. Example support criteria may include a maximum angle between segments for concentric or other nesting portions. The maximum angle may be, for example, between 20 and 90 degrees. In the illustrated example, the angle between the radial segments 712 is 30 degrees. Connecting segments 714 extend between different portions of the object 700. For example, connecting segments 714 connect the concentric annular portions 702 to the separated portion 708. The locations of the connecting segments 714 is defined by criteria such as a maximum unconnected length. For example, connecting segments 714 may be located along the separated portion 708 such that no more than 1 inch extends past a connecting segment 714.

In an aspect, the apparatus 100 forms the spoke support 710 based on a three dimensional computer model including the object 700, the spoke support 710, and any other supports, e.g., supports 716. Using a CAD program, the operator modifies a three dimensional model of the object 700 and supports 716 to include the spoke support 710. In an aspect, the operator moves the object 700 and support 716 upward by the height of the spoke support 710. The operator then adds the spoke support 710 as a two dimensional model along a bottom of the object 700 and supports 716. The operator then uses the CAD program to extrude the two dimensional model of the spoke support 710 to fill the space between the bottom of the object and the bottom of the model. An extrude function is typically available in the CAD program. In this case, the extrude function determines the coordinates of the edges of the two dimensional spoke support and generates a three-dimensional object extending from the two dimensional spoke support to a point such as the object 700 or the bottom of the model (e.g., the build plate) as designated by the operator. The operator may use the CAD software to generate multiple segments of the spoke support 710 within the three dimensional model. In another aspect, the CAD program analyzes a bottom layer of the model including the object 700 and support 716 to generate a model of the spoke support 710. The CAD program automatically moves the object 700 and supports 716 to the correct height. The CAD program then uses rules defined by the support criteria to generate the spoke support 710 having the minimal area that satisfies the support criteria. The three dimensional model including the object 700, supports 716, and spoke support 710 is then provided to the apparatus 100. The apparatus 100 forms the spoke support 710 directly on the build platform 114, then builds the object 700 and supports 716 on top of the spoke support 710.

Moreover a method of fabricating an object may include consecutively, concurrently, or alternatingly, melting powder to form portions of multiple supports as described above. Additionally, for an object fabricated using multiple supports, the post-processing procedures may include removing each of the supports. In an aspect, a support structure may include multiple supports of different types as described herein. The multiple supports may be connected to each other directly, or via the object. The selection of supports for a specific object may be based on the factors described herein (e.g., shape, aspect ratios, orientation, thermal properties, etc.).

In an aspect, not forming part of the present invention, multiple supports may be used in combination to support fabrication of an object, prevent movement of the object, and/or control thermal properties of the object. That is, fabricating an object using additive manufacturing may include use of one or more of: scaffolding, tie-down supports, break-away supports, lateral supports, conformal supports, connecting supports, surrounding supports, keyway supports, breakable supports, leading edge supports, or powder removal ports.

Additionally, scaffolding includes supports that are built underneath an object to provide vertical support to the object. Scaffolding may be formed of interconnected supports, for example, in a honeycomb pattern. In an aspect, scaffolding may be solid or include solid portions. The scaffolding contacts the object at various locations providing load bearing support for the object to be constructed above the scaffolding. The contact between the support structure and the object also prevents lateral movement of the object.

Tie-down supports prevent a relatively thin flat object, or at least a first portion (e.g. first layer) of the object from moving during the build process. Relatively thin objects are prone to warping or peeling. For example, heat dissipation may cause a thin object to warp as it cools. As another example, the recoater may cause lateral forces to be applied to the object, which in some cases lifts an edge of the object. In an aspect, the tie-down supports are built beneath the object to tie the object down to an anchor surface. For example, tie-down supports may extend vertically from an anchor surface such as the platform to the object. The tie-down supports are built by melting the powder at a specific location in each layer beneath the object. The tie-down supports connect to both the platform and the object (e.g., at an edge of the object), preventing the object from warping or peeling. The tie-down supports may be removed from the object in a post-processing procedure.

A break-away support structure reduces the contact area between a support structure and the object. For example, a break-away support structure may include separate portions, each separated by a space. The spaces may reduce the total size of the break-away support structure and the amount of powder consumed in fabricating the break-away support structure. Further, one or more of the portions may have a reduced contact surface with the object. For example, a portion of the support structure may have a pointed contact surface that is easier to remove from the object during post-processing. For example, the portion with the pointed contact surface will break away from the object at the pointed contact surface. The pointed contact surface stills provides the functions of providing load bearing support and tying the object down to prevent warping or peeling.

Lateral support structures are used to support a vertical object. The object may have a relatively high height to width aspect ratio (e.g., greater than 1). That is, the height of the object is many times larger than its width. The lateral support structure is located to a side of the object. For example, the object and the lateral support structure are built in the same layers with the scan pattern in each layer including a portion of the object and a portion of the lateral support structure. The lateral support structure is separated from the object (e.g., by a portion of unmelted powder in each layer) or connected by a break-away support structure. Accordingly, the lateral support structure may be easily removed from the object during post-processing. In an aspect, the lateral support structure provides support against forces applied by the recoater when applying additional powder. Generally, the forces applied by the recoater are in the direction of movement of the recoater as it levels an additional layer of powder. Accordingly, the lateral support structure is built in the direction of movement of the recoater from the object. Moreover, the lateral support structure may be wider at the bottom than at the top. The wider bottom provides stability for the lateral support structure to resist any forces generated by the recoater.

This written description uses examples to disclose the invention, including the preferred embodiments, and also to enable any person skilled in the art to practice the invention, including making and using any devices or systems and performing any incorporated methods. The patentable scope of the invention is defined by the claims.

## Claims

1. A method for fabricating an object (400), comprising:
(a) irradiating a layer of powder in a powder bed with an energy beam in a series of scan lines to form a fused region;
(b) providing a subsequent layer of powder over the powder bed; and
(c) repeating steps (a) and (b) until the object and at least one support structure are formed in the powder bed,
wherein the at least one support structure is a spoke support (410),
wherein the object (400) is built on top of the spoke support (410);
wherein the object (400) includes a first portion and a second portion, wherein a first distal end of the first portion, wherein the first distal end refers to an end of a portion of the object (400) that is away from the center of the object (400), is separated from a second distal end of the second portion, wherein the second distal end refers to an end of a portion of the object (400) that is away from the center of the object (400), by a portion of unfused powder, wherein the at least one support structure connects the first distal end to the second distal end;
(d) removing the object (400) and the at least one support structure from the powder bed;
(e) heat treating the object (400) and the at least one support structure, wherein the at least one support structure maintains dimensional stability of the object (400) during the heat treatment; and
(f) machining away the at least one support structure from the first distal end and the second distal end; wherein
the spoke support (410) has an open structure that allows unfused powder to be removed from the object (400) before heat treating the object (400).

2. The method of claim 1, wherein the at least one support structure includes a substantially horizontal support formed in at least a first layer on a build platform (114).

3. The method of claim 2, wherein removing the object (400) and the at least one support structure from the powder bed includes machining the substantially horizontal support to remove the object (400) and the at least one support structure from the build platform (114).

4. The method of claim 2, wherein the at least one support structure connects the first portion of the object (400) or the second portion of the object (400) to at least one other support that extends from the build platform (114).

5. The method of claim 4, further comprising:
(g) removing the at least one other support from the object after the at least one support structure has been machined away.

6. The method of claim 1, further comprising removing a portion of unfused powder from the object (400) and the support structure before the heat treating.

7. The method of claim 1, wherein the at least one support structure includes at least one straight line segment.

8. The method of claim 1, wherein the at least one support structure includes a plurality of straight line segments that connect each portion of the object (400).

9. The method of claim 8, wherein the plurality of straight line segments minimize total material in a horizontal layer while satisfying a set of support criteria.

10. The method of claim 9, wherein a maximum angle between adjacent line segments is less than 90 degrees.

11. The method of claim 10, wherein a maximum distance between points on a bottom surface of the object (400) that are not connected to the at least one support structure is less than a threshold distance.

12. The method of claim 11, wherein the threshold distance is ca. 2,54 cm (1 inch).

## Patentansprüche

1. Verfahren zur Herstellung eines Objekts (400), umfassend:
(a) Bestrahlung einer Pulverschicht in einem Pulverbett mit einem Energiestrahl in einer Reihe von Abtastlinien, um einen geschmolzenen Bereich zu bilden;
(b) Bereitstellen einer nachfolgenden Pulverschicht über dem Pulverbett; und
(c) Wiederholen der Schritte (a) und (b), bis das Objekt und mindestens eine Trägerstruktur in dem Pulverbett ausgebildet sind,
wobei die mindestens eine Stützstruktur ein Speichenträger (410) ist,
wobei das Objekt (400) auf dem Speichenträger (410) aufgebaut wird;
wobei das Objekt (400) einen ersten Abschnitt und einen zweiten Abschnitt aufweist, wobei ein erstes distales Ende des ersten Abschnitts, wobei sich das erste distale Ende auf ein Ende eines Abschnitts des Objekts (400) bezieht, das von der Mitte des Objekts (400) entfernt ist, von einem zweiten distalen Ende des zweiten Abschnitts getrennt ist, wobei sich das zweite distale Ende auf ein Ende eines Abschnitts des Objekts (400) bezieht, das von der Mitte des Objekts (400) entfernt ist, durch einen Abschnitt von nicht verschmolzenem Pulver, wobei die mindestens eine Stützstruktur das erste distale Ende mit dem zweiten distalen Ende verbindet;
(d) Entfernen des Objektss (400) und der mindestens einen Stützstruktur aus dem Pulverbett;
(e) Wärmebehandlung des Objekts (400) und der mindestens einen Stützstruktur, wobei die mindestens eine Stützstruktur die Dimensionsstabilität des Objekts (400) während der Wärmebehandlung aufrechterhält; und
(f) Abtragen der mindestens einen Stützstruktur von dem ersten distalen Ende und dem zweiten distalen Ende; wobei
der Speichenträger (410) eine offene Struktur aufweist, die es ermöglicht, ungeschmolzenes Pulver vor der Wärmebehandlung des Objekts (400) von dem Objekt (400) zu entfernen.

2. Verfahren nach Anspruch 1, wobei die mindestens eine Trägerstruktur einen im Wesentlichen horizontalen Träger umfasst, der in mindestens einer ersten Schicht auf einer Bauplattform (114) ausgebildet ist.

3. Verfahren nach Anspruch 2, wobei das Entfernen des Objekts (400) und der mindestens einen Stützstruktur vom Pulverbett die Bearbeitung der im Wesentlichen horizontalen Stütze umfasst, um das Objekt (400) und die mindestens eine Stützstruktur von der Bauplattform (114) zu entfernen.

4. Verfahren nach Anspruch 2, wobei die mindestens eine Stützstruktur den ersten Abschnitt des Objekts (400) oder den zweiten Abschnitt des Objekts (400) mit mindestens einer anderen Stütze verbindet, die sich von der Bauplattform (114) aus erstreckt.

5. Verfahren nach Anspruch 4, ferner umfassend:
(g) Entfernen der mindestens einen anderen Stütze von dem Objekt, nachdem die mindestens eine Stützstruktur weggearbeitet worden ist.

6. Verfahren nach Anspruch 1, ferner umfassend das Entfernen eines Teils des ungeschmolzenen Pulvers von dem Objekt (400) und der Stützstruktur vor der Wärmebehandlung.

7. Verfahren nach Anspruch 1, wobei die mindestens eine Stützstruktur mindestens ein gerades Liniensegment umfasst.

8. Verfahren nach Anspruch 1, wobei die mindestens eine Stützstruktur eine Vielzahl von geraden Liniensegmenten umfasst, die jeden Teil des Objekts (400) verbinden.

9. Verfahren nach Anspruch 8, wobei die mehreren geraden Liniensegmente das Gesamtmaterial in einer horizontalen Schicht minimieren und gleichzeitig einen Satz von Stützkriterien erfüllen.

10. Verfahren nach Anspruch 9, wobei ein maximaler Winkel zwischen benachbarten Liniensegmenten weniger als 90 Grad beträgt.

11. Verfahren nach Anspruch 10, wobei ein maximaler Abstand zwischen Punkten auf einer Bodenfläche des Objekts (400), die nicht mit der mindestens einen Stützstruktur verbunden sind, kleiner ist als ein Schwellenabstand.

12. Verfahren nach Anspruch 11, wobei der Schwellenabstand ca. 2,54 cm (1 Zoll) beträgt.

## Revendications

1. Procédé de fabrication d'un objet (400), comprenant :
(a) l'irradiation d'une couche de poudre dans un lit de poudre avec un faisceau d'énergie dans une série de lignes de balayage pour former une région fondue ;
(b) fournir une couche suivante de poudre sur le lit de poudre ; et
(c) répéter les étapes (a) et (b) jusqu'à ce que l'objet et au moins une structure de support soient formés dans le lit de poudre,
dans lequel la au moins une structure de support est un support de rayon (410),
dans lequel l'objet (400) est construit sur le dessus du support de rayons (410) ;
dans lequel l'objet (400) comprend une première partie et une seconde partie, dans lequel une première extrémité distale de la première partie, dans lequel la première extrémité distale fait référence à une extrémité d'une partie de l'objet (400) qui est éloignée du centre de l'objet (400), est séparée d'une seconde extrémité distale de la seconde partie, dans laquelle la seconde extrémité distale fait référence à une extrémité d'une partie de l'objet (400) qui est éloignée du centre de l'objet (400), par une partie de poudre non fondue, dans laquelle la au moins une structure de support relie la première extrémité distale à la seconde extrémité distale ;
(d) retirer l'objet (400) et la au moins une structure de support du lit de poudre ;
(e) traiter thermiquement l'objet (400) et la au moins une structure de support, dans lequel la au moins une structure de support maintient la stabilité dimensionnelle de l'objet (400) pendant le traitement thermique ; et
(f) enlever par usinage la au moins une structure de support de la première extrémité distale et de la seconde extrémité distale ; dans lequel
le support de rayons (410) a une structure ouverte qui permet à la poudre non fondue d'être retirée de l'objet (400) avant le traitement thermique de l'objet (400).

2. Le procédé de la revendication 1, dans lequel la au moins une structure de support comprend un support sensiblement horizontal formé dans au moins une première couche sur une plateforme de construction (114).

3. Le procédé de la revendication 2, dans lequel le retrait de l'objet (400) et de la au moins une structure de support du lit de poudre comprend l'usinage du support sensiblement horizontal pour retirer l'objet (400) et la au moins une structure de support de la plateforme de construction (114).

4. Le procédé de la revendication 2, dans lequel la au moins une structure de support relie la première partie de l'objet (400) ou la seconde partie de l'objet (400) à au moins un autre support qui s'étend depuis la plate-forme de construction (114).

5. Le procédé de la revendication 4, comprenant en outre :
(g) le retrait de l'au moins un autre support de l'objet après que l'au moins une structure de support a été usinée.

6. Le procédé de la revendication 1, comprenant en outre le retrait d'une partie de la poudre non fondue de l'objet (400) et de la structure de support avant le traitement thermique.

7. Le procédé de la revendication 1, dans lequel la au moins une structure de support comprend au moins un segment de ligne droite.

8. Le procédé de la revendication 1, dans lequel la au moins une structure de support comprend une pluralité de segments de ligne droite qui relient chaque partie de l'objet (400).

9. Le procédé de la revendication 8, dans lequel la pluralité de segments de ligne droite minimise le matériau total dans une couche horizontale tout en satisfaisant un ensemble de critères de support.

10. Le procédé de la revendication 9, dans lequel un angle maximal entre des segments de ligne adjacents est inférieur à 90 degrés.

11. Le procédé de la revendication 10, dans lequel une distance maximale entre des points sur une surface inférieure de l'objet (400) qui ne sont pas connectés à la au moins une structure de support est inférieure à une distance seuil.

12. Le procédé de la revendication 11, dans lequel la distance seuil est d'environ 2,54 cm (1 pouce).
